# EUROPEAN PATENT APPLICATION

(11) **EP 4 764 465 A1**
(43) Date of publication of application: **24.06.2026**
(21) Application number: 25831017.6
(22) Date of filing: 23.04.2025
(51) Int. Cl.: G01N 21/88, G01N 21/94, G01N 21/956, G01B 11/22, G06T 7/00, G06T 11/00, G06T 17/30

(54) **BATTERY INSPECTION SYSTEM AND BATTERY INSPECTION METHOD**

(30) Priority: 21.06.2024 KR 20240081009
(71) Applicant: LG Energy Solution, Ltd., Seoul 07335 (KR)
(72) Inventor: JEON, Hyo Seung, Daejeon 34122 (KR); KIM, Tae Young, Daejeon 34122 (KR); CHO, Min Keun, Daejeon 34122 (KR)
(74) Representative: Goddar, Heinz J.
(86) International application number: PCT/KR2025/005457
(87) International publication number: WO 2025/263792

(57) **Abstract**

According to some embodiments, a battery inspection system includes a two-dimensional (2D) inspection device configured to generate a 2D image for an inspection region of a battery, a control device configured to determine whether a defective area is present in the inspection region based on a pattern of the 2D image, and a three-dimensional (3D) inspection device configured to acquire depth information about the inspection region when the defective area is present, and the control device is configured to determine whether the defective area is depressed in the inspection region based on the pattern of the 2D image when the defective area is present, and diagnose a state of the battery based on whether the defective area is depressed and the depth information about the defective area.

## Description

### TECHNICAL FIELD

### Cross-reference to Related Applications

This application claims priority from Korean Patent Application No. 10-2024-0081009, filed on June 21, 2024, the disclosure of which is incorporated by reference herein.

### Technical Field

Embodiments disclosed herein relate to a battery inspection system and a battery inspection method.

### BACKGROUND ART

In recent years, research and development for secondary batteries have been actively conducted. Here, secondary batteries are batteries capable of being recharged and discharged, and may be interpreted to encompass conventional Ni/Cd batteries, Ni/MH batteries, or the like, and recent lithium ion batteries. Among secondary batteries, lithium ion batteries may have a higher energy density than conventional Ni/Cd batteries, Ni/MH batteries, or the like, and may be manufactured to be small and lightweight, so the lithium ion batteries may have high usability as a power source for mobile devices. In recent years, the lithium ion batteries have expanded their range of use to power sources for electric vehicles, making the batteries attract attention as a next-generation energy storage medium.

In a manufacturing process for cylindrical battery cells or the like, defects such as dents, scratches, or the like, may occur in an external surface in the process of sealing electrodes and an electrolyte into a battery can. Analysis based on two-dimensional (2D) images and/or three-dimensional (3D) images of the battery may be performed to inspect for surface defects. With conventional image analysis, it may be difficult to ascertain depth information about an area suspected of being defective, which may be problematic.

### DISCLOSURE OF THE INVENTION

### TECHNICAL PROBLEM

The embodiments disclosed herein are intended, among other objects, to provide a battery inspection system and a battery inspection method capable of performing quantitative inspection by generating a 3D image based on a 2D image to generate depth information about an area suspected of being defective when inspecting for surface defects.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, a battery inspection system includes a two-dimensional (2D) inspection device configured to generate a 2D image for an inspection region of a battery, a control device configured to determine whether a defective area is present in the inspection region based on a pattern of the 2D image, and a three-dimensional (3D) inspection device configured to acquire depth information about the inspection region when the defective area is present, in which the control device is configured to determine whether the defective area is depressed in the inspection region based on the pattern of the 2D image when the defective area is present, and diagnose a state of the battery based on whether the defective area is depressed and the depth information about the defective area.

According to some embodiments, the control device may be configured to generate a 3D image of the inspection region by synthesizing the depth information with the 2D image when the defective area is present and diagnose the state of the battery based on the 3D image.

According to some embodiments, the control device may be configured to derive a normal surface depth of the inspection region and an average depth of the defective area based on depth information in the 3D image, and classify the defective area as a protruding area or a depressed area by comparing the normal surface depth and the average depth.

According to some embodiments, the control device may be configured to diagnose the state of the battery as a surface defective state when the defective area is classified as the depressed area and diagnose the state of the battery as a foreign matter contamination state when the defective area is classified as the protruding area.

According to some embodiments, the control device may be configured to derive a minimum depth value and a maximum depth value of the defective area from the 3D image when the defective area is classified as the depressed area and diagnose a level of the surface defective state based on a depth difference between the minimum depth value and the maximum depth value.

According to some embodiments, the control device may be configured to derive a protrusion pattern of the protruding area when the defective area is classified as the protruding area and classify the type of foreign matter in the foreign matter contamination state based on the protrusion pattern.

According to some embodiments, the 2D inspection device may be configured to generate the 2D image based on a photometric stereo technique.

According to some embodiments, the 3D inspection device may be configured to generate the depth information based on a laser triangulation technique.

According to some embodiments, a battery inspection method includes generating, by a 2D inspection device, a 2D image for an inspection region of a battery, determining, by a control device, whether a defective area is present in the inspection region based on a pattern of the 2D image, acquiring, by a 3D inspection device, depth information about the inspection region when the defective area is present, determining, by the control device, whether the defective area is depressed in the inspection region based on the pattern of the 2D image when the defective area is present, and diagnosing, by the control device, a state of the battery based on whether the defective area is depressed and the depth information about the defective area.

According to some embodiments, the diagnosing of the state of the battery may include generating a 3D image of the inspection region by synthesizing the depth information with the 2D image when the defective area is present and diagnosing the state of the battery based on the 3D image.

According to some embodiments, the determining of whether the defective area is depressed may include deriving a normal surface depth of the inspection region and an average depth of the defective area based on depth information in the 3D image and classifying the defective area as a protruding area or a depressed area by comparing the normal surface depth and the average depth.

According to some embodiments, the diagnosing of the state of the battery may include diagnosing the state of the battery as a surface defective state when the defective area is classified as the depressed area and diagnosing the state of the battery as a foreign matter contamination state when the defective area is classified as the protruding area.

According to some embodiments, the diagnosing of the state of the battery may include deriving a minimum depth value and a maximum depth value of the defective area from the 3D image when the defective area is classified as the depressed area and diagnosing a level of the surface defective state based on a depth difference between the minimum depth value and the maximum depth value.

According to some embodiments, the diagnosing of the state of the battery may include deriving a protrusion pattern of the protruding area when the defective area is classified as the protruding area and classifying the type of foreign matter in the foreign matter contamination state based on the protrusion pattern.

According to some embodiments, the generating of the 2D image may include generating the 2D image based on a photometric stereo technique.

According to some embodiments, the acquiring of the depth information may include generating the depth information based on a laser triangulation technique.

### ADVANTAGEOUS EFFECTS

According to the embodiments disclosed herein, it is possible to provide a battery inspection system and a battery inspection method capable of performing quantitative inspection by generating a 3D image based on a 2D image to generate depth information about an area suspected of being defective when inspecting for surface defects.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 illustrates a method in which a battery inspection system operates according to some embodiments.
FIG. 2 illustrates elements constituting a battery inspection system according to some embodiments.
FIGS. 3 and 4 illustrate a photometric stereo technique that disposes light sources in different directions to generate 2D images according to some embodiments.
FIG. 5 illustrates a 2D image of an inspection region including defective areas according to some embodiments.
FIG. 6 illustrates a 3D image generated by adding depth information about an inspection region onto a 2D image according to some embodiments.
FIG. 7 illustrates a method for inspecting a surface defect of a battery based on depth information calculated through a 3D image according to some embodiments.
FIG. 8 illustrates steps constituting a battery inspection method according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments herein and the terms used therein are not intended to limit the technological features set forth herein to particular embodiments and include various changes, equivalents, or replacements for a corresponding embodiment. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two operator devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

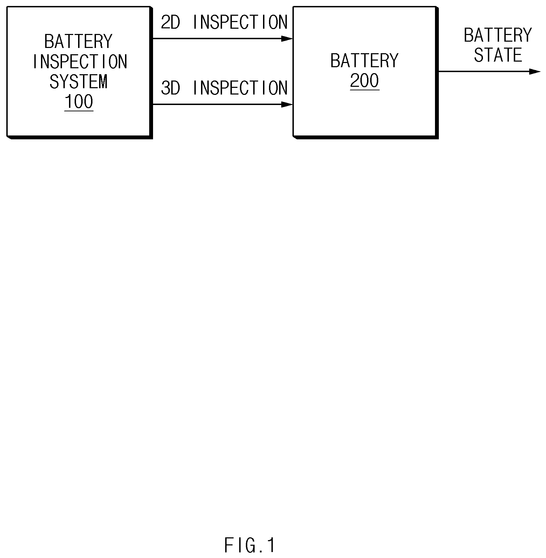

FIG. 1 illustrates a method in which a battery inspection system operates according to some embodiments.

Referring to FIG. 1, a battery inspection system 100 may perform a two-dimensional (2D) inspection and/or three-dimensional (3D) inspection on a battery 200, and may diagnose the state of the battery 200 based on inspection results.

The 2D inspection of the battery inspection system 100 may be performed based on a 2D image of an inspection region of the battery 200. For example, the inspection region may include an outer surface of the battery 200, and the 2D image may be an image obtained by photographing the outer surface of the battery 200. The 3D inspection of the battery inspection system 100 may be performed by adding or synthesizing 3D information to the inspection region of the battery 200. For example, the 3D information may include depth information about the inspection region. Addition/synthesis of 3D information may be performed based on the 2D image.

The battery 200 may include a battery pack or the like to be subjected to inspection by the battery inspection system 100. The battery pack of the battery 200 may include a plurality of battery modules, and each battery module may include a plurality of battery cells. According to an embodiment, the battery 200 may be mounted on an electric power device, and the electric power device may include a mobility device such as an electric vehicle (EV), a hybrid electric vehicle (HEV), an electric bike, or the like. The mobility device may drive a motor based on electric power from the battery 200 or charge the battery 200 with electric power generated through regenerative braking. According to an embodiment, the electric power device may include a charging/discharging device configured to charge or discharge the battery 200, and the charging/discharging device may provide charge/discharge cycles to the battery 200.

The battery inspection system 100 may diagnose the state of the battery 200 based on results of 2D inspection and/or 3D inspection. According to an embodiment, the state of the battery 200 may include a surface state of the battery 200. For example, when there is a dent, a scratch, or the like on the surface of the battery 200, the surface state of the battery 200 may be diagnosed as defective. According to an embodiment, the battery 200 may include a cylindrical battery cell, and the surface state defect may occur during a process of sealing a cylindrical electrode assembly into a cylindrical battery can.

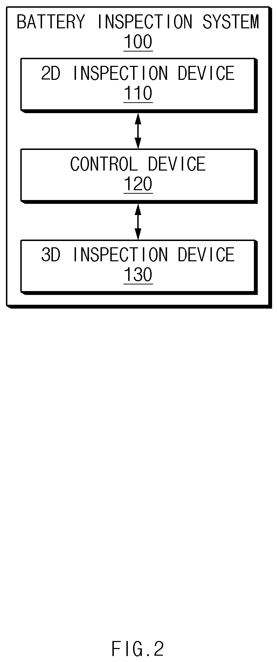

FIG. 2 illustrates elements constituting a battery inspection system according to some embodiments.

Referring to FIG. 2, a battery inspection system 100 may include a 2D inspection device 110, a control device 120, and a 3D inspection device 130. However, the battery inspection system is not limited thereto, and some components may be omitted from the battery inspection system 100, or other general-purpose components may be further included in the battery inspection system 100.

The 2D inspection device 110 may inspect the battery 200 in a two-dimensional manner. The 2D inspection may include generating a 2D image of the battery 200. The 2D inspection device 110 may include a photographing means such as an image sensor or a camera, and may use the photographing means to generate the 2D image. According to an embodiment, the 2D inspection device 110 may be configured to generate the 2D image based on a photometric stereo technique. The photometric stereo technique may refer to a technique that generates a plurality of images by disposing a plurality of light sources in different directions and generates a final image of an object based on the images.

The 3D inspection device 130 may inspect the battery 200 in a three-dimensional manner. The 3D inspection may include generating a 3D image of the battery 200. The 3D image may additionally include 3D information in addition to the 2D image of the battery. The 3D information may include depth information about each pixel of the 2D image. The 3D inspection device 130 may include means for obtaining depth information. According to an embodiment, the 3D inspection device 130 may be configured to generate the depth information based on a laser triangulation technique. The control device 120 may generate the 3D image of the battery 200 by adding and/or synthesizing the depth information to the 2D image.

The control device 120 may have a structure for executing commands that implement operations of the battery inspection system 100. The control device 120 may be implemented as an array of a number of logic gates for processing various operations or as a general-purpose microprocessor, and may consist of a single processor or a plurality of processors. For example, the control device 120 may be implemented in the form of at least one of a microprocessor, a central processing unit (CPU), a graphics processing unit (GPU), and an application processor (AP).

The control device 120 may operate together with a memory configured to store various data, commands, mobile applications, computer programs, and the like. The memory may be configured separately from or integral with the control device 120. The control device 120 may process various operations by executing commands stored in the memory. The memory may be implemented in a form of a non-volatile device such as a read-only memory (ROM), a programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), or the like, or a volatile device such as a dynamic RAM (DRAM), a static RAM (SRAM), a synchronous dynamic RAM (SDRAM), a parallel RAM (PRAM), or the like, or may be implemented in a form of a hard disk drive (HDD), a solid state drive (SSD), a secure digital (SD), Micro-SD, or a combined form thereof.

The 2D inspection device 110 may be configured to generate the 2D image of the inspection region of the battery 200. After manufacturing the battery 200 and before shipping, the battery 200 may be inspected for defects. For example, when the battery 200 is transported along an inspection line, the 2D inspection device 110 may photograph the battery 200 to generate the 2D image, after which the battery 200 may be transported again for the next inspection step. According to an embodiment, the battery 200 may include a cylindrical battery cell, and the inspection region of the battery 200 may include a sealing region between a battery cap and a battery can.

The control device 120 may be configured to determine whether a defective area is present in the inspection region based on a pattern of the 2D image. When a defect occurs in the battery 200, the resulting image pattern may appear on the 2D image. For example, when a dent or scratch occurs on the surface of the cylindrical battery cell, the 2D image may include a pattern thereof. For example, a classification model may be trained through machine learning on a relationship between the image pattern and the defect, and the classification model may be used to determine whether the defective area is present in the inspection region of the battery 200.

The 3D inspection device 130 may be configured to acquire depth information about the inspection region when the defective area is present. For example, a depth value for each pixel of the 2D image may be acquired, and the control device 120 may apply the depth value for each pixel to the 2D image to generate the 3D image. When no defective area is present in the inspection region, a depth pattern corresponding to the normal shape of the battery 200 may be observed, but when the defective area is present, a depth pattern different from the normal shape may be observed. For example, when there is a dent or scratch, the depth value of the defective area may be greater than the depth values of surrounding normal areas.

The control device 120 may be configured to determine whether the defective area is depressed in the inspection region based on the pattern of the 2D image when the defective area is present. The depth pattern of the defective area may differ from the depth pattern of the normal area, but this pattern difference may be divided into two different types. When the defective area is depressed, this may indicate that the inspection region of the battery 200 is defective. On the other hand, when the defective area protrudes, this may indicate a situation in which foreign matter is attached to the inspection region of the battery 200. Since the purpose of the battery inspection system 100 is to inspect for damage such as a dent, a scratch, or the like, a determination as to whether the defective area is depressed may be made.

The control device 120 may be configured to diagnose the state of the battery 200 based on whether the defective area is depressed and the depth information about the defective area. When the depth difference between the defective area and the normal area does not exceed a threshold, the depth difference may be classified as a normal state that does not affect the performance or quality of the battery 200. In addition, the area occupied by the defective area within the inspection region may be additionally considered in the diagnosis of the state of the battery 200, depending on whether it exceed a threshold.

According to an embodiment, the control device 120 may be configured to generate a 3D image of the inspection region by synthesizing the depth information with a 2D image when the defective area is present, and diagnose the state of the battery 200 based on the 3D image. For example, a depth value may be assigned to each pixel of the 2D image, and the state of the battery 200 may be diagnosed based on the depth value of the inspection region. For example, a determination as to whether a difference between the depth value and the normal depth value at each pixel exceeds a threshold may be made, the area or the like of the pixel area exceeding the threshold may be calculated, and the state of the battery 200 may be diagnosed based on these results. According to an embodiment, the 3D image may visually display the depth value of each pixel, and the visual display may include color, brightness, or the like.

According to an embodiment, the control device 120 may be configured to derive a normal surface depth of the inspection region and an average depth of the defective area based on depth information in the 3D image, and classify the defective area as a protruding area or a depressed area by comparing the normal surface depth and the average depth. The inspection region may be classified as a normal area and a defective area based on information about the normal shape of the battery 200 according to the manufacturing specifications. The surface depth of the normal area may be utilized to detect the defective area. When the defective area is observed to have a depth, as indicated by the depth information, that differs from the normal surface depth, the average depth of the defective area may be calculated based on the depth value of each of the pixels constituting the defective area. In an embodiment, if the average depth of the defective area is deeper than the normal surface depth, the defective area may be classified as a depressed area. When the average depth of the defective area is shallower than the normal surface depth, the defective area may be classified as the protruding area.

According to an embodiment, the control device 120 may be configured to diagnose the state of the battery 200 as a surface defective state when classified as the depressed area, and diagnose the state of the battery 200 as a foreign matter contamination state when classified as the protruding area. When a dent or scratch occurs and a portion of the surface of the battery 200 is lost, the defective area may be classified as the depressed area and may be diagnosed as a defect occurring on the surface of the battery 200. On the other hand, when the defective area is classified as the protruding area, the state of the battery 200 may be diagnosed as having foreign matter such as hair, floating objects, or metal particles in contact with the surface of the battery 200.

According to an embodiment, the control device 120 may be configured to derive a minimum depth value and a maximum depth value of the defective area from the 3D image when the defective area is classified as the depressed area and diagnose a level of the surface defective state based on a depth difference between the minimum depth value and the maximum depth value. As the difference in depth increases, the defective area may be diagnosed as having a more severe level of defect, and reference values for classifying the defect may be set. For example, three reference values may be set to classify the surface defective state into four levels: high, medium, low, and normal. In an embodiment, the area of the defective area may be calculated to diagnose the level of surface defective state. For example, the area of the defective area may be calculated based on pixels where the depth difference from the normal surface depth is greater than or equal to a certain value. The certain value required to calculate the area of the defective area may be set depending on the inspection precision requirements.

According to an embodiment, the control device 120 may be configured to derive a protrusion pattern of the protruding area when the defective area is classified as the protruding area, and classify the type of foreign matter in the foreign matter contamination state based on the protrusion pattern. Foreign matter that causes the protruding area may include hair, metal powder, dust, or the like. Depending on the type of foreign matter, the protrusion pattern may appear differently, and the type of foreign matter may be classified based on the relationship between the two. For example, the type of foreign matter may be classified using a classification model learned through machine learning on the protrusion pattern according to the type of foreign matter.

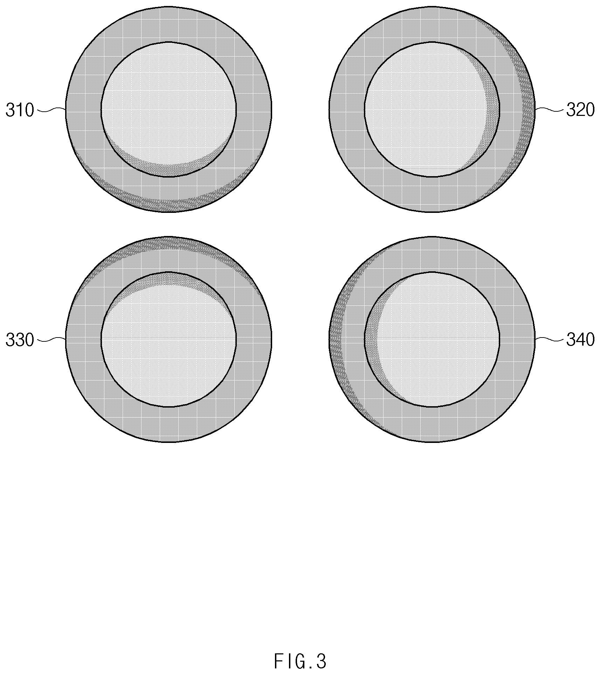

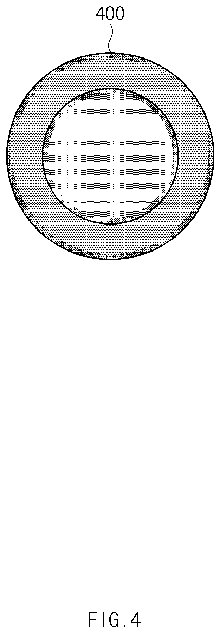

FIGS. 3 and 4 illustrate a photometric stereo technique that disposes light sources in different directions to generate 2D images according to some embodiments.

Referring to FIG. 3, images 310 to 340 may be illustrated to describe the photometric stereo technique that disposes light sources in different directions to generate a 2D image.

A first image 310 may represent a case where a light source is located at the top of the battery 200. A second image 320 may represent a case where a light source is located on the left side of the battery 200. A third image 330 may represent a case where a light source is located at the bottom of the battery 200. A fourth image 340 may represent a case where the light source is located on the right side of the battery 200.

Referring to FIG. 4, a 2D image 400 generated based on the images 310 to 340 corresponding to the light sources in different directions according to a photometric stereo technique may be illustrated.

According to an embodiment, the 2D image 400 may represent a top surface of the cylindrical battery cell. Since the 2D image 400 is generated based on the photometric stereo technique, the inspection region of the battery 200 may be more precisely inspected, using the 2D image 400, for the presence or absence of the defective area.

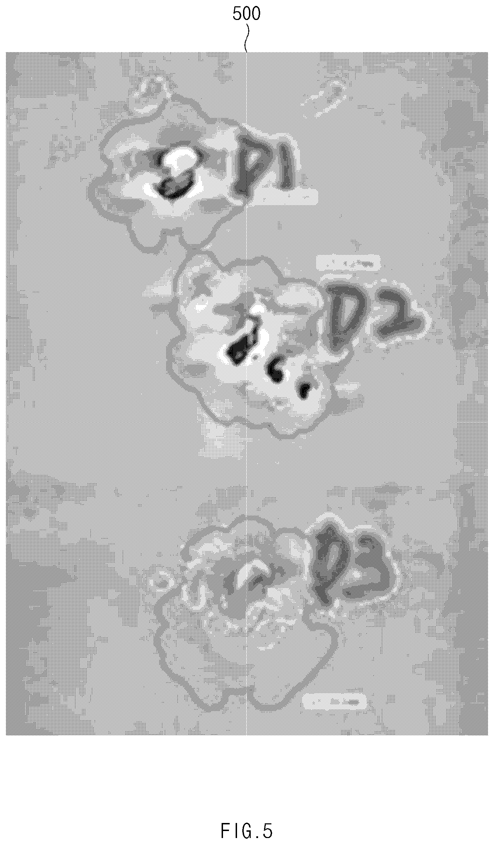

FIG. 5 illustrates a 2D image of an inspection region including defective areas according to some embodiments.

Referring to FIG. 5, a 2D image 500 of an inspection region including defective areas D1, D2, and D3 may be illustrated.

Based on the pattern of the 2D image 500, the defective areas D1, D2, and D3 may be identified in the inspection area. The defective areas D1, D2, and D3 may be identified using the classification model trained through machine learning on the relationship between the image pattern and defects. According to an embodiment, the defective areas D1, D2, and D3 may include dents and/or scratches that occur during the process of sealing the battery cell.

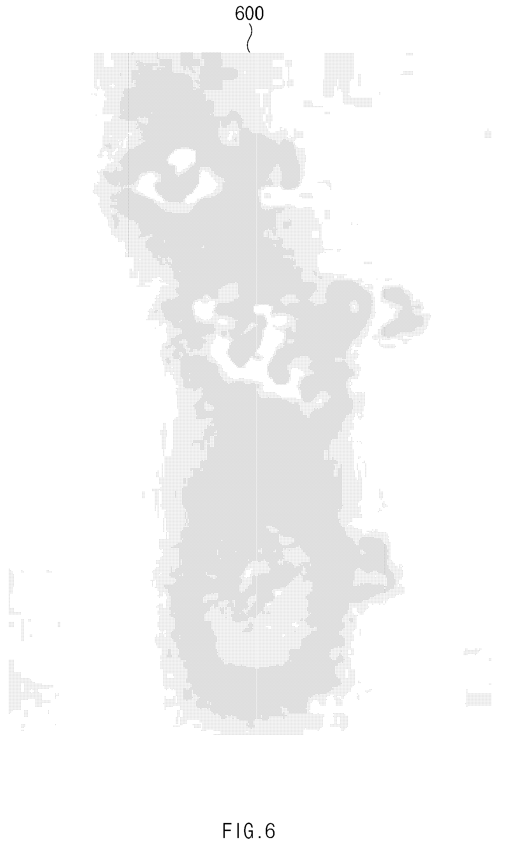

FIG. 6 illustrates a 3D image generated by adding depth information about an inspection region onto an 2D image according to some embodiments.

Referring to FIG. 6, a 3D image 600 generated by adding depth information about an inspection region onto a 2D image may be illustrated. According to an embodiment, the 3D image 600 may represent depth information as color and/or brightness.

Based on the 3D image 600, the defective areas D1, D2, and D3 may be classified as areas corresponding to protruding areas or areas corresponding to depressed areas. When the defective areas D1, D2, and D3 are classified as the protruding areas, the type of foreign matter that causes the defective areas D1, D2, and D3 may be identified based on the protrusion pattern. When the defective areas D1, D2, and D3 are classified as the depressed areas, the level of the surface defect may be determined based on a difference between a maximum depth value and a minimum depth value, or based on a difference between a normal surface depth and a maximum depth.

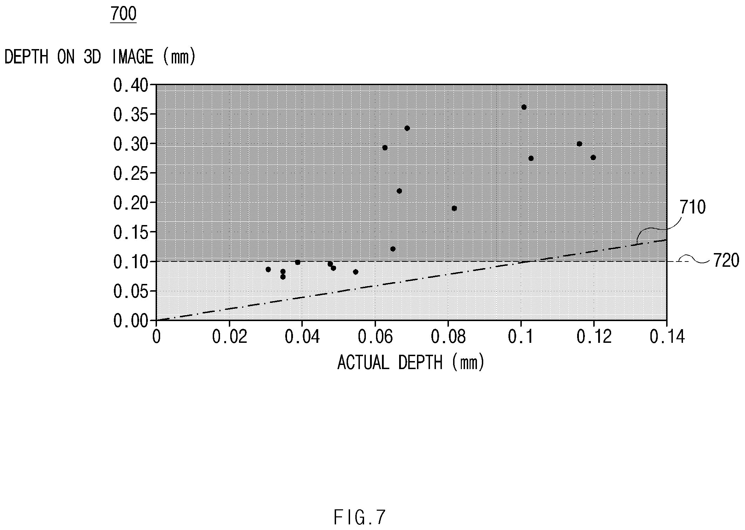

FIG. 7 illustrates a method for inspecting a surface defect of a battery based on depth information calculated through a 3D image according to some embodiments.

Referring to FIG. 7, a graph 700 exemplifying the method for inspecting a surface defect of a battery based on depth information calculated through a 3D image may be illustrated. A vertical axis of the graph 700 may represent the depth on the 3D image, which may refer to a depth difference between a maximum depth value and a minimum depth value, or a depth difference relative to the normal surface depth.

The graph 700 may plot estimated depth values and actually measured depth values on the 3D image. The graph 700 may display a line 710 that matches the estimated value and the measured value on a one-to-one basis. Compared to the line 710, the plotted values may have a pattern where the estimated values are larger than the measured values.

The values being plotted may not fit to the line 710, but may have a pattern that fits to a line with a different slope than the line 710. In summary, the values being plotted may have a linear pattern. Therefore, the higher the depth value estimated through the 3D image, the greater the actual depth of the dent or scratch may be. Therefore, the depth value estimated through the 3D image may be used as an indicator for classifying surface defects of the battery 200.

The graph 700 may display a critical depth 720. Among the plotted values, values exceeding the critical depth 720 may be classified as surface defects. Values that do not exceed the critical depth 720 may be classified as normal. The critical depth 720 may be determined by considering the inspection precision of the battery inspection system 100. When a more precise examination is required, the critical depth 720 may be lowered.

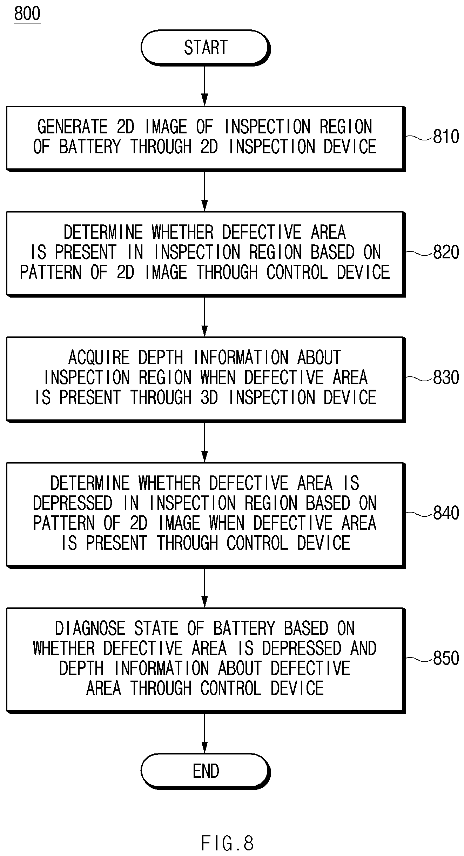

FIG. 8 illustrates steps constituting a battery inspection method according to some embodiments.

Referring to FIG. 8, a battery inspection method 800 may include steps 810 to 850. However, the battery inspection method is not limited thereto, and some steps may be omitted or other general steps may be added, and the steps of the battery inspection method 800 may be executed in a different order than the illustrated order.

The battery inspection method 800 may include steps that are processed in time series in the battery inspection system 100. Therefore, even when the content is omitted below, the content described above for the battery inspection system 100 may be equally applied to the battery inspection method 800.

Steps 810 to 850 of the battery inspection method 800 may be performed by the 2D inspection device 110, the control device 120, the 3D inspection device 130 of the battery inspection system 100.

In step 810, the battery inspection system 100 may perform generating a 2D image of an inspection region of the battery through the 2D inspection device.

In step 820, the battery inspection system 100 may perform determining whether a defective area is present in the inspection region based on a pattern of the 2D image through the control device.

In step 830, the battery inspection system 100 may perform acquiring depth information about the inspection region when the defective area is present through the 3D inspection device.

In step 840, the battery inspection system 100 may perform determining whether the defective area is depressed in the inspection region based on the pattern of the 2D image when the defective area is present through the control device.

In step 850, the battery inspection system 100 may perform diagnosing the state of the battery based on whether the defective area is depressed and the depth information about the defective area through the control device.

According to an embodiment, the battery inspection method 800 may be implemented in the form of a computer program stored in a computer-readable storage medium. That is, the computer program may include commands for implementing the battery inspection method 800, and the commands of the program may be stored in the computer-readable storage medium. The computer program may include a mobile application.

According to an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

### (Reference Signs List)

| | | | |
|---|---|---|---|
| 100: | Battery inspection system | 110: | 2D Inspection device |
| 120: | Control device | 130: | 3D inspection device |
| 200: | Battery | | |

## Claims

1. A battery inspection system comprising:
a two-dimensional (2D) inspection device configured to generate a 2D image for an inspection region of a battery;
a control device configured to determine whether a defective area is present in the inspection region based on a pattern of the 2D image; and
a three-dimensional (3D) inspection device configured to acquire depth information about the inspection region when the defective area is present,
wherein the control device is configured to:
determine whether the defective area is depressed in the inspection region based on the pattern of the 2D image when the defective area is present; and
diagnose a state of the battery based on whether the defective area is depressed and the depth information about the defective area.

2. The battery inspection system of claim 1, wherein the control device is configured to:
generate a 3D image of the inspection region by synthesizing the depth information with the 2D image when the defective area is present; and
diagnose the state of the battery based on the 3D image.

3. The battery inspection system of claim 2, wherein the control device is configured to:
derive a normal surface depth of the inspection region and an average depth of the defective area based on depth information in the 3D image; and
classify the defective area as a protruding area or a depressed area by comparing the normal surface depth and the average depth.

4. The battery inspection system of claim 3, wherein the control device is configured to:
diagnose the state of the battery as a surface defective state when the defective area is classified as the depressed area; and
diagnose the state of the battery as a foreign matter contamination state when the defective area is classified as the protruding area.

5. The battery inspection system of claim 4, wherein the control device is configured to:
derive a minimum depth value and a maximum depth value of the defective area from the 3D image when the defective area is classified as the depressed area; and
diagnose a level of the surface defective state based on a depth difference between the minimum depth value and the maximum depth value.

6. The battery inspection system of claim 4, wherein the control device is configured to:
derive a protrusion pattern of the protruding area when the defective area is classified as the protruding area; and
classify the type of foreign matter in the foreign matter contamination state based on the protrusion pattern.

7. The battery inspection system of claim 1, wherein the 2D inspection device is configured to generate the 2D image based on a photometric stereo technique.

8. The battery inspection system of claim 1, wherein the 3D inspection device is configured to generate the depth information based on a laser triangulation technique.

9. A battery inspection method comprising:
generating, by a 2D inspection device, a 2D image for an inspection region of a battery;
determining, by a control device, whether a defective area is present in the inspection region based on a pattern of the 2D image;
acquiring, by a 3D inspection device, depth information about the inspection region when the defective area is present;
determining, by the control device, whether the defective area is depressed in the inspection region based on the pattern of the 2D image when the defective area is present; and
diagnosing, by the control device, a state of the battery based on whether the defective area is depressed and the depth information about the defective area.

10. The battery inspection method of claim 9, wherein the diagnosing of the state of the battery includes:
generating a 3D image of the inspection region by synthesizing the depth information with the 2D image when the defective area is present; and
diagnosing the state of the battery based on the 3D image.

11. The battery inspection method of claim 10, wherein the determining of whether the defective area is depressed includes:
deriving a normal surface depth of the inspection region and an average depth of the defective area based on depth information in the 3D image; and
classifying the defective area as a protruding area or a depressed area by comparing the normal surface depth and the average depth.

12. The battery inspection method of claim 11, wherein the diagnosing of the state of the battery includes:
diagnosing the state of the battery as a surface defective state when the defective area is classified as the depressed area; and
diagnosing the state of the battery as a foreign matter contamination state when the defective area is classified as the protruding area.

13. The battery inspection method of claim 12, wherein the diagnosing of the state of the battery include:
deriving a minimum depth value and a maximum depth value of the defective area from the 3D image when the defective area is classified as the depressed area; and
diagnosing a level of the surface defective state based on a depth difference between the minimum depth value and the maximum depth value.

14. The battery inspection method of claim 12, wherein the diagnosing of the state of the battery includes:
deriving a protrusion pattern of the protruding area when the defective area is classified as the protruding area; and
classifying the type of foreign matter in the foreign matter contamination state based on the protrusion pattern.

15. The battery inspection method of claim 8, wherein the generating of the 2D image includes generating the 2D image based on a photometric stereo technique.

16. The battery inspection method of claim 9, wherein the acquiring of the depth information includes generating the depth information based on a laser triangulation technique.
